# EUROPEAN PATENT APPLICATION

(11) **EP 4 083 676 A1**
(43) Date of publication of application: **02.11.2022**
(21) Application number: 21171493.6
(22) Date of filing: 30.04.2021
(51) Int. Cl.: G02B 6/42

(54) **IMPROVED PHOTONIC PACKAGING**

(71) Applicant: Sentea, 9052 Gent (BE)
(72) Inventor: BOCKSTAELE, Ronny, 9052 Gent (BE); VERHAEGEN, Karsten, 9052 Gent (BE); SPUESENS, Thijs, 9052 Gent (BE)
(74) Representative: Nederlandsch Octrooibureau

(57) **Abstract**

The invention relates, amongst others, to an optoelectronic device comprising: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; wherein said PCB comprises an opening surrounded, preferably circumferentially surrounded, by portions of said PCB and dividing said PCB surface in a first and second region for thermally insulating said first region and said second region from one another; wherein the portion of said PCB surface on which the PIC is mounted belongs to the first region; and wherein said connecting of the electronic interface to the PCB relates to at least one wire bond extending to the second region, said wire bond preferably being comprised in the optoelectronic device.

## Description

### Field of the invention

The present invention relates to packaging of devices comprising a photonic integrated chip (PIC), particularly devices comprising both a PIC and a PCB, wherein preferably said devices have requirements relating to operating temperatures. The present invention further relates to methods for manufacturing such devices.

### Background art

In many optical systems, e.g., optical sensors, a PIC module (photonic integrated circuit) allows reducing the system size and cost and increasing the performance, by integrating the optical functions (e.g., filters, switching, detecting light) on integrated circuit, such as silicon photonics. There is a need for low-cost packaging methods for such devices, which therefore are preferably based on standard electronics production methods, such as chip-on-board techniques.

Compared to standard electronics packaging, packaging of optoelectronic devices involving a PIC confronts a designer with extra challenges. This may relate to one or more additional requirements, such as an operating temperature requirement, adequate heat dissipation and/or cooling, quasi hermetic protection, and/or efficient coupling to fibers.

State of the art mounting may relate to the PIC being mounted on a metal carrier on which the PCB is assembled (screw connections). However, the use of standard PCB material may result in undesirable temperature exchange between the PIC and further portions of the device and/or difficulties in meeting requirements regarding operating temperature of the device. This may, e.g., reduce the efficiency of the cooling/heating of the PIC.

State of the art devices and methods may relate to hermetic, or quasi-hermetic, protection of the electrical interface, e.g., bond pads and/or wire bonds. However, such protection according to the state of the art may suffer from interference with the proper functioning and/or manufacturing of the devices at the level of the one or more optical interfaces comprised in the PIC.

Optical coupling requires good access from the optical fibers to the optical interface comprised in the PIC, such as an edge coupler comprised in the PIC. In many state of the art devices, particularly the PICs comprised therein, edge coupling is suboptimal due to suboptimal geometry at the level of the optical interface.

Furthermore, for the sake of keeping manufacturing cost low, it is desirable to use standard electronics as much as possible.

(R. Marchetti, C. Lacava, L. Carroll, K. Gradkowski, and P. Minzioni; Coupling strategies for silicon photonics integrated chips, Photon. Res. 7, 201-239, 2019, doi:10.1364/PRJ.7.000201), (Yang, Hao & Cheng, Qixiang & Chen, Rui & Bergman, Keren; Polarization-Diversity Microring-Based Optical Switch Fabric in a Switch-and-Select Architecture, 2020, doi:10.1364/OFC.2020.Th3B.2), (Mu X, Wu S, Cheng L, Fu HY. Edge Couplers in Silicon Photonic Integrated Circuits: A Review. Applied Sciences 10(4):1538, 2020, doi:10.3390/app10041538), WO 2021/61899 A1, US 9,787,054 B2, US 2015/0241631 A1, US 2018/0024299 A1, US 2019/0212511 A1, and US 2019/0285804 A1 disclose related devices and methods, but do not address the above problems and/or are overly complex.

For at least the reasons stated above, there is a need in the art for improved photonic packaging. It is an object of the present invention, in its various respective aspects, to provide devices and methods each overcoming at least one of the various limitations discussed above.

### Summary of the invention

Optoelectronic devices according to the invention may comprise: a printed circuit board, PCB, comprising a planar PCB surface; a photonic integrated circuit, PIC, comprising a fiber attach region for attachment to a fiber array, FA, and an electronic interface for connecting to the PCB; wherein said PIC is preferably mounted on said PCB either via a portion of said PCB surface being an integral part of the PCB surface or via a submount provided in a cutout of said PCB. The PCB may or may not comprise an opening. The device may or may not comprise thermal vias. The device may or may not comprise a dam. The device may or may have a ratio of the length and the width for said PIC being at least 2:1. The device may or may not have a trench for reducing stray light. The device may or may not have the PIC sticking out with respect to the PCB. The device may or may not have a sidewall belonging to a lateral surface of the PIC and sticking out with respect to further portions of the lateral surface of the PIC. The device may or may not have the PIC comprising a first and second photonic circuit combined with a temperature control element being shared by said first and said second photonic circuit.

Methods for manufacturing an optoelectronic device according to the invention may comprise the steps of: providing a PCB; mounting a PIC on said PCB, wherein preferably said mounting is via a portion of said PCB surface being an integral part of the PCB surface or via a submount provided in a cutout of said PCB; mounting a wire bond connecting an electronic interface comprised in the PIC to the PCB; positioning a fiber array, FA, with respect to a fiber attach region comprised in said PIC; preferably, providing, between said FA and said dam, a reinforcing member, preferably a glass block, for reinforcing said fiber attach adhesive connection; and providing, with respect to said wire bond, an encapsulant for circumferentially surrounding said wire bond. The method may or may not involve a dam. The method may or may not have a step of providing said dam preceding any of said step of providing said fiber attach adhesive and said step of providing said encapsulant. The method may or may not have said step of providing said encapsulant preceding said step of providing said fiber attach adhesive.

According to a first aspect, the invention provides an optoelectronic device comprises: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; wherein said PCB comprises an opening surrounded, preferably circumferentially surrounded, by portions of said PCB and dividing said PCB surface in a first and second region for thermally insulating said first region and said second region from one another; wherein the portion of said PCB surface on which the PIC is mounted belongs to the first region; and wherein said connecting of the electronic interface to the PCB relates to at least one wire bond extending to the second region, said wire bond preferably being comprised in the optoelectronic device.

This may have the advantage that the second region, which may, e.g., comprise one or more electrical components comprised in the device and connected to the PIC via the wire bond, is thermally insulated from the first region. This is advantageous particularly in that requirements relating to the operating temperature of the first region and requirements relating to the operating temperature of the second region may be different. For instance, one of the two regions, or a component belonging to one of the two regions, e.g. the PIC, may be subject to more stringent operating temperature requirements than further portions of the device. For instance, the PIC may be subject to a first interval of operating temperature, whereas portions of the device situated at the second region may be subject to a second interval of operating temperature different from said first interval. In examples, the first interval may be a narrow range around 25 °C, or even a single target temperature set at 25 °C, whereas the second interval of operating temperature may be, e.g. between - 20 °C to 40 °C. In other examples one or more electrical components comprised in the second region may dissipate heat or cause cooling which may leak toward the first region, which may be undesirable. Such leaking may be mitigated by said thermal insulation. Vice versa, the leaking of heat or cooling generated in the first region, e.g., originating from the PIC, toward the second region, may advantageously be mitigated by said thermal insulation. This may lead to improved and more predictable temperature behavior, and more robust operation overall. Said thermal insulation provided by said opening may be particularly advantageous with certain common types of PCB material having a thermal conductivity of the PCB along a planar direction which is higher than that in the planar direction. Particularly, as reported, e.g., on (https://www.nwengineeringllc.com/article/fr4-thermal-properties-to-consider-during-design.php as available 28 April 2021), in example embodiments, the thermal conductivity along an orthogonal direction may be about 0.3 W/(m•K), whereas that along a planar direction may be about three times as large, i.e. about 0.9 W/(m•K). Hence, in embodiments, the opening may advantageously reduce the thermal propagation along the planar direction. On the other hand, alternatively or additionally, in embodiments, thermal vias may advantageously increase the thermal propagation along the orthogonal direction.

In embodiments, said opening is empty, i.e. filled with air, which advantageously has very low thermal conductivity.

According to a second aspect, the invention provides a method for manufacturing an optoelectronic device, comprising the steps of: providing a PCB; mounting a PIC on said PCB, wherein preferably said mounting is via a portion of said PCB surface being an integral part of the PCB surface or via a submount provided in a cutout of said PCB; mounting a wire bond connecting an electronic interface comprised in the PIC to the PCB; positioning a fiber array, FA, with respect to a fiber attach region comprised in said PIC; providing, at a surface of the PIC facing away from the PCB, a dam for preventing a fiber attach adhesive from flowing beyond said fiber attach region; providing said fiber attach adhesive for establishing a fiber attach adhesive connection between said FA and said fiber attach region; preferably, providing, between said FA and said dam, a reinforcing member, preferably a glass block, for reinforcing said fiber attach adhesive connection; providing, with respect to said wire bond, an encapsulant for circumferentially surrounding said wire bond; wherein said step of providing said dam precedes any of said step of providing said fiber attach adhesive and said step of providing said encapsulant.

According to a third aspect, the invention provides a method for manufacturing an optoelectronic device, comprising the steps of: providing a PCB; mounting a PIC on said PCB, wherein preferably said mounting is via a portion of said PCB surface being an integral part of the PCB surface or via a submount provided in a cutout of said PCB; mounting a wire bond connecting an electronic interface comprised in the PIC to the PCB; providing, with respect to said wire bond, an encapsulant for circumferentially surrounding said wire bond; positioning a fiber array, FA, with respect to a fiber attach region comprised in said PIC; providing a fiber attach adhesive for establishing a fiber attach adhesive connection between said FA and said fiber attach region; preferably, providing, between said FA and said wire bond, a reinforcing member, preferably a glass block, for reinforcing said fiber attach adhesive connection; wherein said step of providing said encapsulant precedes said step of providing said fiber attach adhesive.

Such methods according to both the second and third aspect may have the advantage that a hermetic or quasi hermetic interface is realized without complicating handling during manufacturing. Therein, it is ensured that the material for the encapsulant does not creep within the fiber attach region, as this would compromise the quality of the adhesive connection. Likewise, it is to be ensured that the material for the adhesive does not creep beyond the fiber attach region, as this could compromise the quality of the encapsulation provided by the encapsulant. Thereby, the methods may relax the requirements regarding viscosity and thixotropy on the material used for the adhesive and the material used for the encapsulant.

In relation to the handling, particularly, while the device may have any maximum dimension in the range 1 mm and 500 mm, in example embodiments, the PCB has a length of 40 mm by 60 mm, whereas the fiber array may be, e.g., 200 mm long. The fiber being fragile and relatively large, it is highly preferable to mount the PIC on the PCB first, and only connect the fiber array later on. Related, it is desirable to place the PIC on the PCB so that it can be handled like a standard panel as long as possible during production.

The method according to the second aspect solves these problems by involving a dam, which ensures that material for the adhesive as known to the skilled person and the material for the encapsulant as known to the skilled person do not interfere with one another. The dam may be any material that is either solid state or preferably has high viscosity and low thixotropy, preferably is a polymere. Such a dam enables to relax the requirements on the adhesive and encapsulant regarding viscosity and thixotropy, since interaction between these materials becomes unlikely owing to the dam. The method according to the third aspect solves this problem by prescribing a sequence, wherein the encapsulant may be any material that has sufficiently high viscosity and stays in place after application, i.e. has low thixotropy. Thereby, advantageously, by doing the wire bonding and encapsulation first, and only apply the adhesive later on, complexity of handling is reduced. In embodiments, a reinforcing member, preferably a glass block is thereby provided to provide better adhesive connection and improve structural integrity of the connection. While the device may have any dimension, in example embodiments the PIC has a thickness of between 100 and 1000 µm, e.g. 600 or 700 or 800 µm, whereas the FA has a thickness of more than 2000 µm. Hence a reinforcing member such as a glass block may provide for more structural integrity. Thereby, the dimensions of the reinforcing member are preferably adapted to those of the FA and the PIC, preferably the thickness of the FA and the PIC, so as to provide optimal structural reinforcement. In preferred embodiments, said reinforcing member, preferably said glass block, has a maximum dimension between 1 mm and 5 mm, preferably 3 mm. In preferred embodiments, the dimensions of said glass block are adapted to the dimensions, e.g., the thickness, of said FA and/or the thickness of said PIC and/or the dimensions of said fiber attach region and/or, if present, the dimensions of said dam. In example embodiments, the dimensions of the glass block are 2 mm by 1.5 mm by 3 mm.

According to a further aspect, the invention provides an optoelectronic device comprises: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; wherein said optoelectronic device further comprises, at a surface of the PIC facing away from the PCB, a dam for preventing a fiber attach adhesive from flowing beyond said fiber attach region; wherein preferably said PIC is mounted on said PCB either via a portion of said PCB surface being an integral part of the PCB surface or via a submount provided in a cutout of said PCB.

The advantages of such a device are similar to those of the second method according to the invention.

According to a further aspect, the invention provides an optoelectronic device comprises: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; wherein said PIC comprises a width along a width direction and a length along a length direction, wherein said PIC comprises, at the fiber attach region, an edge coupler comprising a sidewall for coupling in light from said FA, said sidewall extending along said width direction, wherein a ratio of the length and the width of said PIC is at least 2:1, preferably at least 5:2, more preferably at least 3:1, most preferably 5:1.

The advantage of such a device may relate to enabling edge coupling of light along a transverse direction (9a), with reduction of stray light, as discussed further, e.g., in Example 5. Moreover, in embodiments of the invention wherein the device comprises an opening, this may have the advantage of enabling a large size for an opening in the PCB, as discussed further, e.g., in Example 1.

According to a further aspect, the invention provides an optoelectronic device comprises: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; wherein said PIC further comprises, at a surface of the PIC facing away from the PCB, a trench for reducing stray light, said trench extending along a length direction of said PIC, wherein preferably a ratio of a length and a width of said PIC is at least 2:1, preferably at least 5:2, more preferably at least 3:1, most preferably 5:1.

The advantage of such a device may be the reduction of stray light, which, as known to the skilled person, reduces interference and improves overall robustness and reliability. In embodiments, light may reflect and scatter across a substrate of the PIC. While the device may be of any type of suitable material and have any suitable dimensions, in example embodiments, broadband light may couple into the PIC, comprising, e.g., a silicon waveguide, a silicon oxide cladding, and a silicon substrate. In such embodiments, a certain amount of stray light may be expected. The trench may address this problem. In example embodiments, the trench may be at least 50 µm deep, preferably at least 100 µm deep, and have a length of at least 200 µm, preferably at least 500 µm, more preferably about 750 µm . In preferred embodiments, the trench is combined with a ratio of a length and a width of said PIC being at least 2:1 or more, and edge coupling of light along a transverse direction (9a), since this leads to a further reduction of stray light, as also illustrated, e.g., in Example 5.

According to a further aspect, the invention provides an optoelectronic device comprises: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; wherein said PIC comprises, at the fiber attach region, an edge coupler for coupling in light from said FA, and wherein said PIC and said PCB are relatively positioned such that the PIC sticks out with respect to the PCB by at least 100 µm, preferably at least 200 µm, more preferably between 300 µm and 1000 µm; most preferably between 400 µm and 500 µm; and/or said edge coupler comprises a sidewall extending along a lateral surface of said PIC, wherein said sidewall sticks out with respect to further portions of said lateral surface of said PIC by at least 5 µm, preferably at least 10 µm, in view of a dicing profile of said lateral surface.

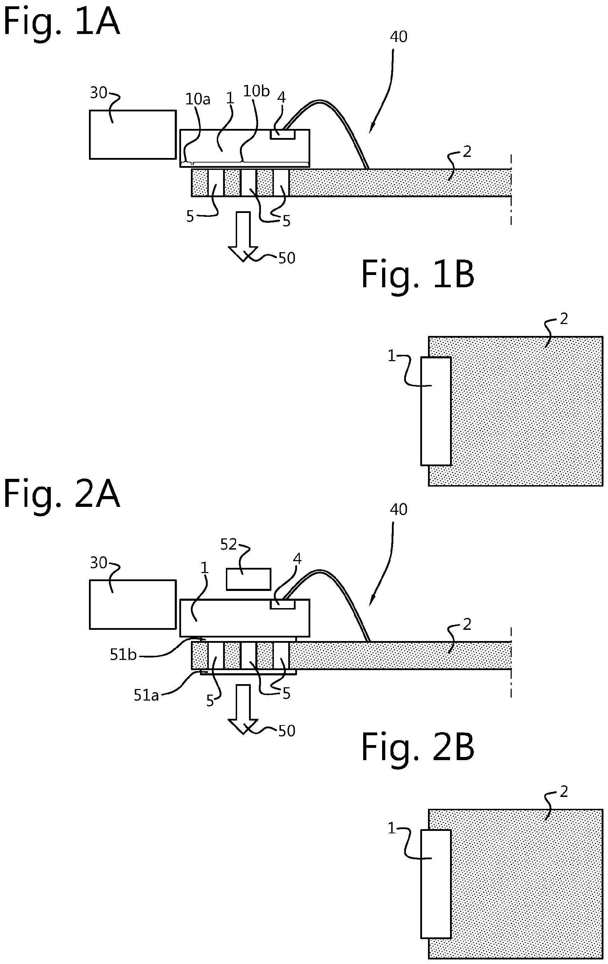

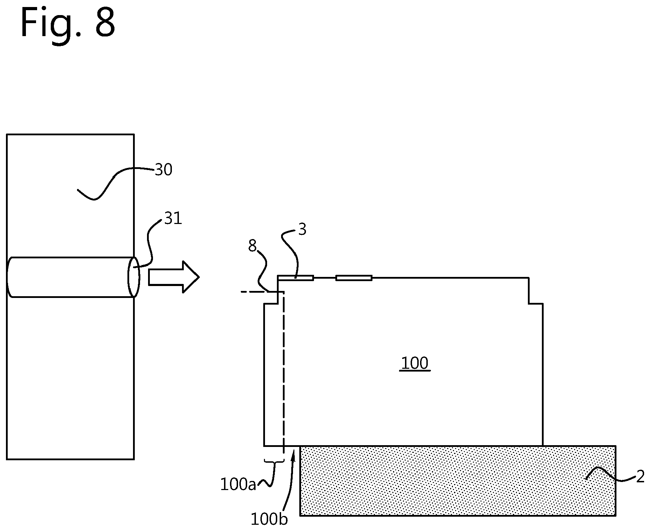

Such a device advantageously provides for a double protrusion, as illustrated in Fig. 8. The inventors have found that this may allow for easy coupling with the fiber array. The problem of coupling with the FA is well-known. Optical coupling requires good access from the optical fibers to the "edge coupler" structures on the PIC. State of the art PICs may have edge coupler structures that start inside the dicing trench, which is inside the substrate. The substrate may then be an obstruction. In the prior art, several means have been proposed to address this problem, e.g., a lidless FA, see Fig. 2(a) of (Yang, Hao & Cheng, Qixiang & Chen, Rui & Bergman, Keren; Polarization-Diversity Microring-Based Optical Switch Fabric in a Switch-and-Select Architecture, 2020, doi:10.1364/OFC.2020.Th3B.2). This however increases the cost of the FA and complicates manufacturing. The double protrusion may solve this problem.

According to a further aspect, the invention provides an optoelectronic device comprises: a printed circuit board, PCB, comprising a planar PCB surface; a photonic integrated circuit, PIC, comprising a fiber attach region for attachment to a fiber array, FA, and an electronic interface for connecting to the PCB; wherein said PIC is mounted on a portion of said PCB surface being an integral part of the PCB surface; said optoelectronic device further comprising a temperature control element, preferably a Peltier element, wherein said PIC comprises a first and second photonic circuit provided with a respective first and second temperature sensor, and wherein the respective thermal vias extending from said PIC through the PCB are configured for temperature exchange with said temperature control element being shared by said first and said second photonic circuit.

The advantage of such devices is that a single temperature control element may be shared, reducing cost, footprint and weight while ensuring reliability. In embodiments, the device may further comprise a third and fourth photonic circuit with respective temperature sensors all sharing said temperature control element. In embodiments, the device may comprise more than four photonic circuits with respective temperature sensors all sharing said temperature control element.

Embodiments of the present invention and their respective advantages may be understood from the detailed description and the dependent claims.

### Brief description of the drawings

The present invention will be discussed in more detail below, with reference to the attached drawings, in which:
Fig. 1A (side cross-sectional view) and 1 B (top view) illustrate example embodiments of the optoelectronic device according to the present invention;
Fig. 2A (side cross-sectional view) and 2B (top view) illustrate example embodiments of the optoelectronic device according to the present invention;
Fig. 3A (side cross-sectional view) and 3B (top view) illustrate example embodiments of the optoelectronic device according to the present invention;
Fig. 4 (side cross-sectional view) illustrates example embodiments of the optoelectronic device according to the present invention;
Fig. 5 (side cross-sectional view) illustrates example embodiments of the optoelectronic device according to the present invention;
Fig. 6 (side cross-sectional view) illustrates example embodiments of the optoelectronic device according to the present invention;
Fig. 7 (side cross-sectional view) illustrates example embodiments of the optoelectronic device according to the present invention;
Fig. 8 (side cross-sectional view) illustrates example embodiments of the optoelectronic device according to the present invention;
Fig. 9A (top view) and 9B (side cross-sectional view) illustrate example embodiments of the optoelectronic device according to the present invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "PCB" may refer to any printed circuit board with, apart from the PIC, either no components installed, or one or more additional components installed. As known to the skilled person, a PCB may serve as mechanical support and/or electrical support connecting electrical or electronic components using conductive tracks and/or pads and/or other conductive means preferably etched from one or more sheet layers of copper laminated onto and/or between sheet layers of a non-conductive substrate. The non-conductive substrate is preferably an insulating material such as FR-4 glass epoxy, but may be any material suitable application as PCB substrate, such as a ceramic material, or cotton paper impregnated with phenolic resin, for instance tan or brown. Components may be soldered onto the PCB to both electrically connect and mechanically fasten them to it, if relevant for the component. For the device of the invention, any attachment of the PIC to the PCB may be considered, including any combination of one or more of gluing, soldering and attachment through mechanical fastening means, e.g. screws. When considered alone, i.e. without components such as the PIC mounted thereupon, the PCB of the invention may be referred to as a printed wiring board (PWB) or etched wiring board. The device, on the other hand, may alternatively be referred to as any of a printed circuit assembly (PCA), a printed circuit board assembly or a PCB assembly (PCBA), or a circuit card assembly (CCA). The term "PIC", on the other hand, may refer to a photonic integrated circuit or, equivalently integrated optical circuit, i.e. a device that provides at least one photonic function and preferably integrates at least two photonic functions. Thereby, the functions may relate to one or more of at least one of, e.g., an interconnect waveguide, a power splitter, an optical amplifier, an optical modulator, a filter, a laser, an externally modulated laser, a detector, a photodetector, a sensor, an arrayed waveguide grating (AWG).

In embodiments, the PCB substrate is FR-4 glass epoxy, which may have a thermal conductivity of, e.g., about 3 W/(m•K), see (Sivabalan Mohan, Thermal Comparison of FR-4 and Insulated Metal Substrate PCB for GaN Inverter, Application Report TIDA030-June 2019, Texas Instruments, https://www.ti.com/lit/an/tida030/tida030.pdf). In embodiments, the PCB substrate has a thermal conductivity between 0.01 and 50 W/(m•K), preferably between 0.05 and 10 W/(m•K), more preferably between 0.1 W/(m•K) and 10 W/(m•K). In embodiments, the thermal conductivity of the PCB along an orthogonal direction may differ from, particularly, be lower than, that in a planar direction. Particularly, as disclosed, e.g., in (https://www.nwengineeringllc.com/article/fr4-thermal-properties-to-consider-during-design.php as available 28 April 2021), the thermal conductivity along an orthogonal direction may be about 0.3 W/(m•K), whereas that along a planar direction may be about three times as large, i.e. about 0.9 W/(m•K). In embodiments, the thermal conductivities of the PCB along a respective orthogonal and planar direction are between 0.05 and 10 W/(m•K) and between 0.15 and 30 W/(m•K), respectively, preferably between 0.1 and 3 W/(m•K) and between 0.3 and 9 W/(m•K), respectively. In embodiments, the ratio of the thermal conductivity of the PCB along a planar direction and along an orthogonal direction may be at least 3:2, preferably at least 5:3, more preferably at least 2:1, most preferably 3:1.

In embodiments, said opening is empty, i.e. filled with air, which advantageously has very low thermal conductivity. In embodiments, said opening is at least partially empty. In embodiments, said opening is at least partially, optionally entirely, filled with a filler material with thermal conductivity preferably lower than that of a PCB material, preferably with thermal conductivity lower than 2.5 W/(m•K), more preferably lower than 2 W/(m•K), more preferably lower than 1 W/(m•K), most preferably lower than 100 mW/(m•K). In embodiments wherein said opening is at least partially empty, said opening is reused for guiding one or more objects, e.g., components belonging to the device, through said opening. In embodiments, each of said objects touches an edge of said opening for less than 50% of the circumference of said opening, more preferably for less than 80%, most preferably without touching a circumference of said opening.

Embodiments of the optoelectronic device are described with reference to Figs. 1A-9B.

In embodiments, the opening (53) extends along an opening length direction for a length being at least 25%, preferably at least 50%, of a maximum dimension of said PCB (2), wherein preferably the length of said opening (53) is between 50% and 150%, preferably between 60% and 100%, of a maximum dimension of said PIC (1) along said opening length direction.

In embodiments, the PCB (1) comprises one or more thermal vias (5) for temperature exchange extending from said PIC through the PCB (1), said one or more vias preferably being metal vias, more preferably copper vias, wherein preferably said one or more vias extend orthogonally through the PCB (1). The thermal vias may be similar to and may have similar advantages as the ones described in (Sivabalan Mohan, Thermal Comparison of FR-4 and Insulated Metal Substrate PCB for GaN Inverter, Application Report TIDA030-June 2019, Texas Instruments, https://www.ti.com/lit/an/tida030/tida030.pdf), where they are proposed for PCBs, but not for optoelectronic devices with a PIC mounted on an integral portion of the PCB. In embodiments, one or more thermal vias may provide improved thermal propagation in a direction orthogonal to the PCB surface. This may be particularly advantageous with certain common types of PCB material having a thermal conductivity of the PCB along a planar direction which is higher than that in the planar direction. Particularly, as reported, e.g., on (https://www.nwengineeringllc.com/article/fr4-thermal-properties-to-consider-during-design.php as available 28 April 2021), in example embodiments, the thermal conductivity along an orthogonal direction may be about 0.3 W/(m•K), whereas that along a planar direction may be about three times as large, i.e. about 0.9 W/(m•K). Hence, in embodiments, the one or more thermal vias may advantageously increase the thermal propagation along the orthogonal direction. On the other hand, alternatively or additionally, in embodiments, an opening in the PCB may advantageously decrease the thermal propagation along the planar direction.

In embodiments, the one or more thermal vias may relate to one or more metal inlays, preferably copper inlays, with diameter according to a planar direction being at least 1 mm, preferably at least 2 mm, more preferably at least 3 mm, more preferably between 4 or 20 mm, most preferably 4 or 5 or 6 or 7 or 8 or 9 or 10 or 11 or 12 or 13 or 14 or 15 or 16 or 17 or 18 or 19 or 20 mm or more than 20 mm. In preferred embodiments (not shown in the figures), this metal inlay relates to a single inlay. In preferred embodiments, the metal inlay may be a copper inlay, which may, e.g., comprise or be one as disclosed in (https://schweizer.ag/en/technologies-solutions/pcb-technologies/innovative-technologies-solutions/inlay as available 28 April 2021). In embodiments, the inlay may be referred to as "coin". While the shape of this metal inlay may resemble a coin, it may be of any shape, e.g. with footprint being square, rectangular, curved, and/or any polygon.

In embodiments, the opening (53) defines an opening width direction orthogonal to said opening length direction, and wherein a dimension of said first region (2a) along said opening width direction is not more than a dimension of said second region (2b) along said opening width direction, preferably at least 25% less than said dimension of said second region (2b).

In embodiments, the device further comprises, at a surface of the PIC (1) facing away from the PCB (2), a dam (6a, 6b) for preventing a fiber attach adhesive from flowing beyond said fiber attach region.

In embodiments, said dam comprises a longitudinal section (6a) extending along a length direction (9b) of said PIC (1) and a transversal section (6b) extending along a width direction (9a) of said PIC (1), together defining a dammed volume extending above said fiber attach region.

In embodiments, said device further comprises said FA (30) and a reinforcing member (63), preferably a glass block (63), for reinforcing a fiber attach adhesive connection (62). In embodiments, said reinforcing member (63) at least partially extends above said fiber attach region. In embodiments with a dam, said reinforcing member (63) preferably at least partially extends within said dammed volume.

In preferred embodiments, said reinforcing member, preferably said glass block, has a maximum dimension between 1 mm and 5 mm, preferably 3 mm. In preferred embodiments, the dimensions of said glass block are adapted to the dimensions, e.g., the thickness, of said FA and/or the thickness of said PIC and/or the dimensions of said fiber attach region and/or, if present, the dimensions of said dam. In example embodiments, the dimensions of the glass block are 2 mm by 1.5 mm by 3 mm.

In embodiments, the device further comprises said wire bond (40) being surrounded circumferentially by an encapsulant (61).

In embodiments, said PIC (1) comprises a width along a width direction (9a) and a length along a length direction (9b), wherein said PIC (1) comprises, at the fiber attach region, an edge coupler (3) comprising a sidewall for coupling in light from said FA (30), said sidewall extending along said width direction (9a), wherein a ratio of the length and the width of said PIC (1) is at least 2:1, preferably at least 5:2, more preferably at least 3:1, most preferably 5:1.

In embodiments, the device further comprises, at a surface of the PIC (1) facing away from the PCB (2), a trench (7) for reducing stray light, said trench extending along a length direction of said PIC (1), wherein preferably a ratio of a length and a width of said PIC (1) is at least 2:1, preferably at least 5:2, more preferably at least 3:1, most preferably 5:1.

In embodiments, said PIC (1) comprises, at the fiber attach region, an edge coupler (3) for coupling in light from said FA (30), and wherein said PIC (1) and said PCB (2) are relatively positioned such that the PIC (1) sticks out with respect to the PCB (1) by at least 100 µm, preferably at least 200 µm, more preferably between 300 µm and 1000 µm; most preferably between 400 µm and 500 µm.

In embodiments, said edge coupler (3) comprises a sidewall extending along a lateral surface of said PIC (1), wherein said sidewall sticks out with respect to further portions of said lateral surface of said PIC by at least 5 µm, preferably at least 10 µm, in view of a dicing profile (8) of said lateral surface.

In embodiments, said device further comprises a temperature control element (58), preferably a Peltier element, wherein said PIC (1) comprises a first (1a) and second (1 b) photonic circuit provided with a respective first (52a) and second (52b) temperature sensor, and wherein the respective thermal vias (5) extending from said PIC (1) through the PCB (2) are configured for temperature exchange with said temperature control element (58) being a shared temperature control element (58) shared by said first (1a) and said second (1b) photonic circuit.

In embodiments wherein the PIC is placed on an integral portion of the PCB, the use of a submount, as is often done in state-of-the-art designs, may be avoided, which may simplify the manufacturing and/or the cost and/or the robustness of the device. Moreover, the inventors have found that placing of the PIC on a portion of the PCB, having an electrically non-conductive substrate, may in certain cases lead to heat problems, which may however be overcome by including one or more thermal vias, which may allow for effective heat dissipation and/or more effective overall temperature control. All this may relate to overcoming the problem of how to work with common PCBs as known to the skilled person, which have substrates such as FR-4 glass epoxy designed for low electrical conductivity, with typically low thermal conductivity, especially with respect to the direction orthogonal to the PCB surface.

The invention as described herein may have broad industrial application in any sector involving devices comprising a PCB and a PIC. The invention may be particularly useful in cases where the device has requirements relating to operating temperature. Merely by means of example, the device may, e.g., be used in an optical interrogator. In examples, the optoelectronic device may be used with a Fiber Bragg Grating (FBG) sensor. In yet other examples, the optoelectronic device may relate to structural health monitoring, with, e.g., bridges, dams, tunnels or buildings equipped with devices comprising fiber optic sensors for continuous structural health monitoring. In still other examples, the optoelectronic device may relate to bearing condition monitoring. In yet other examples, the optoelectronic device may relate to wind turbines, wherein the device and related fiber optic sensors and may be installed on blades, bearings, gearbox, tower and jacket of wind turbines to predict, detect and prevent failures before they lead to costly repairs.

The invention will be further discussed with reference to following examples, which do not limit the scope of the invention, and are illustrated by Fig. 1A-9B. The dimensions of Fig. 1A-9B are not to be construed as limiting as the figures are not drawn to scale.

### Examples

### Example 1

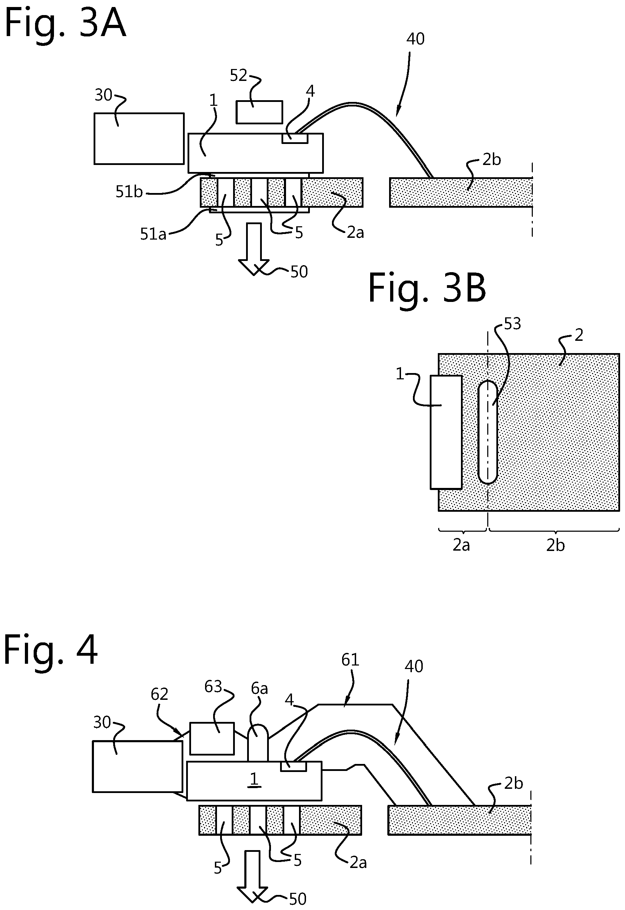

Fig. 1A (side cross-sectional view) and 1B (top view) illustrate embodiments of the optoelectronic device according to Example 1. Fig. 2A (side cross-sectional view) and 2B (top view) illustrate other embodiments of the optoelectronic device according to Example 1. Fig. 3A (side cross-sectional view) and 3B (top view) illustrate embodiments of the optoelectronic device according to Example 1. Embodiments of this example are particularly advantageous with respect to temperature exchange direction (50), cost reduction and adequate geometry.

The optoelectronic device shown comprises a printed circuit board, PCB (2), comprising a planar PCB surface. It furthermore comprises a photonic integrated circuit, PIC (1), comprising a fiber attach region for attachment to a fiber array, FA (30), and an electronic interface (4) for connecting to the PCB (2). The PIC (1) is mounted on a portion of said PCB surface being an integral part of the PCB surface, which has the advantage of low manufacturing cost, avoiding the separate provision of a submount.

In the embodiments illustrated in Fig. 1A-3B, said PIC (1) comprises, at the fiber attach region, an edge coupler (3) for coupling in light from said FA (30), and wherein said PIC (1) and said PCB (2) are relatively positioned such that the PIC (1), particularly a portion (10) of the PIC surface facing the PCB (2), sticks out with respect to the PCB (1) by at least 100 µm, preferably at least 200 µm, more preferably between 300 µm and 1000 µm; most preferably between 400 µm and 500 µm, whereas the rest (10b) of the PIC surface facing the PCB (2) is in contact with said PCB. However, for other embodiments according to Example 1 (not illustrated by the figures), the PIC does not stick out.

In the embodiments illustrated in Fig. 1A-3B, said PIC (1) comprises a width along a width direction (9a) and a length along a length direction (9b), wherein said PIC (1) comprises, at the fiber attach region, an edge coupler (3) comprising a sidewall for coupling in light from said FA (30), said sidewall extending along said width direction (9a), wherein a ratio of the length and the width of said PIC (1) is at least 2:1, preferably at least 5:2, more preferably at least 3:1, most preferably 5:1. This has the advantage of enabling a large size for an opening (53) in the PCB, as discussed further in this example. Furthermore, this also has the advantage of enabling edge coupling of light along a transverse direction (9a), with reduction of stray light, as also illustrated, e.g., in Example 5.

In the embodiments illustrated in Fig. 1A-3B, the PCB (1) comprises one or more thermal vias (5) for temperature exchange extending from said PIC through the PCB (1), said one or more vias preferably being metal vias, more preferably copper vias, wherein preferably said one or more vias extend orthogonally through the PCB (1). In embodiments illustrated by Fig. 1A-1B, the rest (10b) of the PIC surface facing the PCB (2) is in direct contact with said PCB and hence also with said vias. In embodiments illustrated by Fig. 2A-3B, the rest (10b) of the PIC surface facing the PCB (2) is in contact with said PCB via a PIC-related thermal plate (51b), said thermal plate preferably comprising a thermally conductive material, more preferably being a metal thermal plate, most preferably being a copper thermal plate, which advantageously channels thermal flows from the PIC to the thermal vias (5). In embodiments illustrated by Fig. 2A-3B, this PIC-related thermal plate (51b) is complemented by a PCB-related thermal plate (51a), preferably identical in material to the PIC-related thermal plate (51b), further enhancing the temperature exchange flow along the temperature exchange direction (50). In other embodiments of Example 1 (not shown), the device comprises only one of said PIC-related thermal plate (51b) and said PCB-related thermal plate (51b).

In the embodiments illustrated in Fig. 2A-3B, a thermal sensor (52) is mounted on the PIC (1). This sensor may measure a signal for transfer to a control module (not shown) which controls a temperature control element (not shown) which may be situated at the other side of the thermal vias (5), similar to the temperature control element (58) as illustrated for Example 5.

The embodiments illustrated in Fig. 3A-3B are similar to those of Fig. 2A-2B, with the difference that the PCB comprises an opening (53) circumferentially surrounded by portions of said PCB and dividing said PCB surface in a first (2a) and second (2b) region for thermally insulating said first region (2a) and said second region (2b) from one another. The portion of said PCB surface on which the PIC (1) is mounted belongs to the first region (2a). The connecting of the electronic interface (4) to the PCB (2) relates to at least one wire bond (40) extending to the second region (2b), said wire bond (40) being comprised in the optoelectronic device. This may advantageously reduce the impact of heating or cooling realized in the second region, e.g., originating from one or more electrical components comprised in the device and connected to the PIC (1) via the wire bond (40), on the temperature control in the first region, e.g., the temperature control of the PIC (1). Vice versa, this may advantageously reduce the impact of heating or cooling realized in the first region, e.g., originating from the PIC (1), on the temperature control in the second region. This may lead to improved and more predictable temperature behavior, and more robust operation overall. Additionally, it allows working with standard substrate material for the PCB. In example embodiments, the substrate of the PCB (1) has a thermal conductivity lower than 50 W/(m·K). In other example embodiments, the substrate of the PCB (1) is FR-4 glass epoxy.

As shown in Fig. 3A-3B, the opening (53) extends along an opening length direction in parallel with the length direction of the PIC (1). Accordingly, the length of said opening (53) is between 50% and 150%, preferably between 60% and 100%, of a maximum dimension of said PIC (1) along said opening length direction.

As shown in Fig. 3A-3B, the opening (53) extends along an opening length direction over the PCB (2). The opening length may be at least 25%, preferably at least 50%, of a maximum dimension of said PCB (2).

Fig. 3A-3B illustrates embodiments wherein the opening (53) is present in combination with vias (5) and thermal plates (51a, 51b). This combination leads to maximized temperature exchange along the temperature exchange direction (50), owing to the vias (5) and thermal plates (51a, 51b) optimizing transfer, combined with minimal dissipation or influence from the second region (2b) of the pcb (2), owing to the opening (53). However, the embodiments illustrated by Fig. 4-6, 9A-9B may also comprise said opening (as shown), or not comprise said opening (not shown). Furthermore, the embodiments as shown in Figures 1A-2B and 7-8 may not comprise said opening (as shown), but may equally comprise said opening (not shown).

Finally, as shown in Fig. 3A-3B, the opening (53) defines an opening width direction orthogonal to said opening length direction. Herein, a dimension of said first region (2a) along said opening width direction is not more than a dimension of said second region (2b) along said opening width direction, preferably at least 25% less than said dimension of said second region (2b). This leads to a large space available for mounting components within the second region (2b), which is advantageously thermally insulated from the first region (2a) by the opening (53).

### Example 2

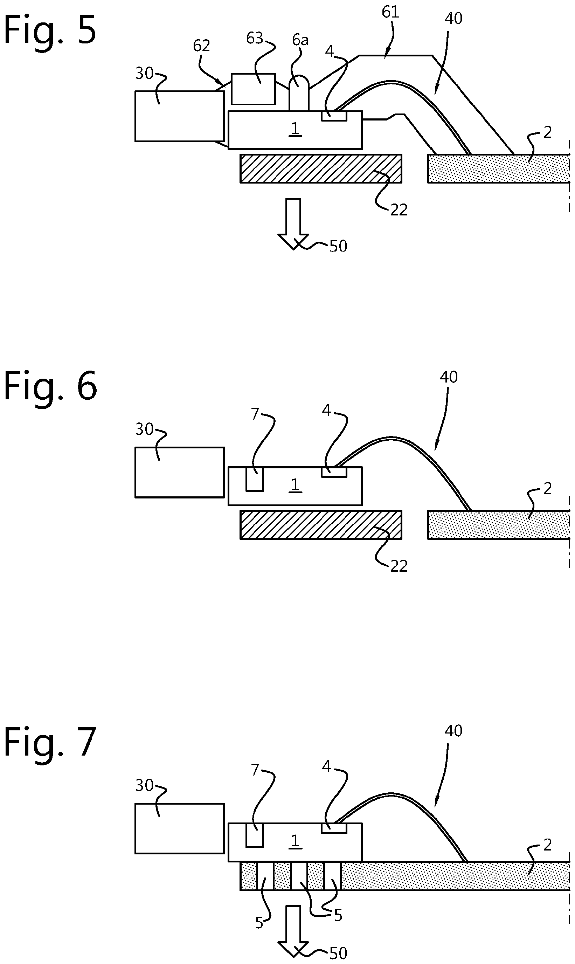

Fig. 4 (side cross-sectional view) illustrates example embodiments of the optoelectronic device according to Example 3. Fig. 5 (side cross-sectional view) illustrates other embodiments of the optoelectronic device according to Example 2. Embodiments of this example are particularly advantageous with respect to providing a hermetic or quasi hermetic interface, thereby providing ease of manufacturing. This may relate to the defining of the fiber attach region and separating encapsulant from FA adhesive.

The optoelectronic device examples shown in this example are similar to those of Example 1. They comprise a printed circuit board, PCB (2), comprising a planar PCB surface. It furthermore comprises a photonic integrated circuit, PIC (1), comprising a fiber attach region for attachment to a fiber array, FA (30), and an electronic interface (4) for connecting to the PCB (2). In embodiments of Fig. 4, the PIC (1) is mounted on a portion of said PCB surface being an integral part of the PCB surface, which has the advantage of low manufacturing cost, avoiding the separate provision of a submount. In embodiments of Fig. 5, the PIC (1) is mounted on a submount (22).

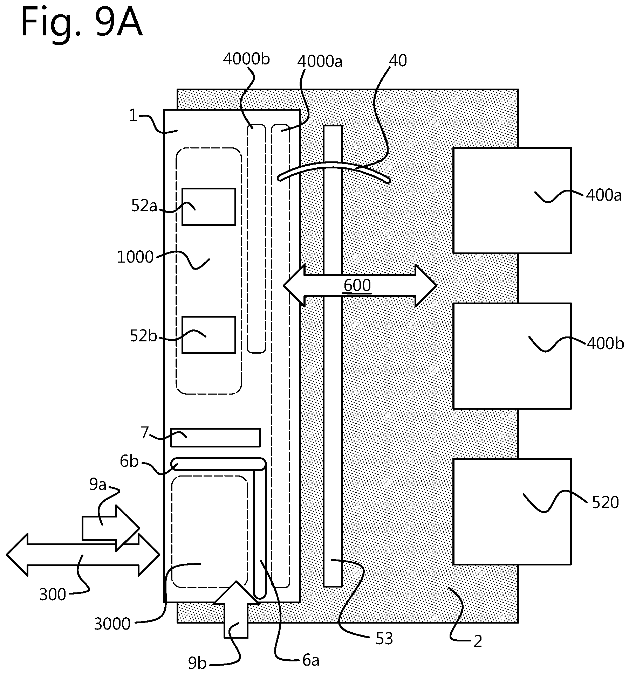

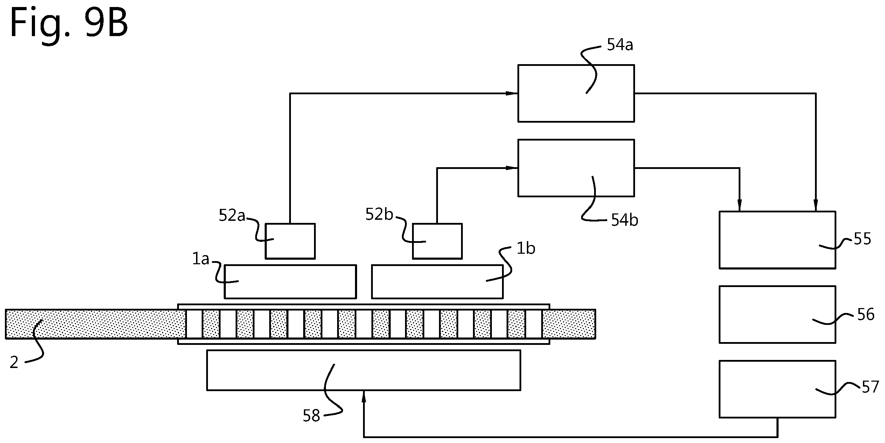

For both Fig. 4 and 5, the optoelectronic device further comprises, at a surface of the PIC (1) facing away from the PCB (2), a dam (6a, 6b) for preventing a fiber attach adhesive from flowing beyond said fiber attach region. Not shown in Fig. 4 and 5 but illustrated by Fig. 9 and present in both Example 2 and 5 is a two-section dam. The dam comprises a longitudinal section (6a) extending along a length direction (9b) of said PIC (1) and a transversal section (6b) extending along a width direction (9a) of said PIC (1), together defining a dammed volume extending above said fiber attach region. The device comprises said FA (30) and a reinforcing member (63), particularly a glass block (63), for reinforcing a fiber attach adhesive connection (62). Thereby, said reinforcing member (63) extends within said dammed volume. The device further comprises said wire bond (40) being surrounded circumferentially by an encapsulant (61). In example embodiments, said reinforcing member, preferably said glass block, extends over a first dimension being 2 mm in a first direction away from the PIC, over a second dimension being 1.5 mm in a second direction from the FA to the wire bond, and over a third dimension being 3 mm in the third direction orthogonal to the first and second direction. With reference to the side views provided by Fig. 4-5, which is not drawn to scale, the first and second direction are shown but with different ratio between the first and second dimension, whereas the third direction is orthogonal to the side views.

The present example illustrates a hermetic or quasi hermetic interface that may be realized without complicating handling during manufacturing, as explained elsewhere in this document.

The embodiments of this example may be combined with any feature of the embodiments of the other examples. For instance, the example device of Fig. 4 and 5 may or may not comprise an opening (53) and/or trench (7) and/or a dicing profile (8) and/or a first (1a) and second (1b) photonic circuit provided with a respective first (52a) and second (52b) temperature sensor and a shared temperature control element (58).

### Example 3

Fig. 6 (side cross-sectional view) illustrates example embodiments of the optoelectronic device according to Example 3. Fig. 7 (side cross-sectional view) illustrates other example embodiments of the optoelectronic device according to Example 3.

The optoelectronic device examples of Fig. 7 shown in this example are similar to those of Example 1 and 2. They comprise a printed circuit board, PCB (2), comprising a planar PCB surface. It furthermore comprises a photonic integrated circuit, PIC (1), comprising a fiber attach region for attachment to a fiber array, FA (30), and an electronic interface (4) for connecting to the PCB (2). In embodiments of Fig. 7, the PIC (1) is mounted on a portion of said PCB surface being an integral part of the PCB surface. In other embodiments (not shown), the PIC (1) is mounted on a submount (22).

The example devices comprise, at a surface of the PIC (1) facing away from the PCB (2), a trench (7) for reducing stray light, said trench extending along a length direction of said PIC (1). The trench may be at least 50 µm deep, preferably at least 100 µm deep, and have a length of at least 200 µm, preferably at least 500 µm, more preferably about 750 µm. In preferred embodiments, the trench is combined with a ratio of a length and a width of said PIC being at least 2:1 or more, and edge coupling of light along a transverse direction (9a), since this leads to a further reduction of stray light, as discussed further, e.g., in Example 5.

The embodiments of this example may be combined with any feature of the embodiments of the other examples. For instance, the example device of Fig. 6-7 may or may not comprise any of a dam (6a, 6b) and/or a submount and/or a dicing profile (8) and/or a first (1a) and second (1 b) photonic circuit provided with a respective first (52a) and second (52b) temperature sensor and a shared temperature control element (58).

### Example 4

Fig. 8 (side cross-sectional view) illustrates example embodiments of the optoelectronic device according to Example 4.

The optoelectronic device examples of Fig. 8 shown in this example are similar to those of Examples 1-3. They comprise a printed circuit board, PCB (2), comprising a planar PCB surface. It furthermore comprises a photonic integrated circuit, PIC (1), comprising a fiber attach region for attachment to a fiber array, FA (30), and an electronic interface (4) for connecting to the PCB (2). In embodiments of Fig. 7, the PIC (1) is mounted on a portion of said PCB surface being an integral part of the PCB surface. In other embodiments (not shown), the PIC (1) is mounted on a submount (22).

In this example, said PIC (1) comprises, at the fiber attach region, an edge coupler (3) for coupling in light from said FA (30), and wherein said PIC (1) and said PCB (2) are relatively positioned such that the PIC (1) sticks out with respect to the PCB (1) by at least 100 µm, preferably at least 200 µm, more preferably between 300 µm and 1000 µm; most preferably between 400 µm and 500 µm. Moreover, said edge coupler (3) comprises a sidewall extending along a lateral surface of said PIC (1), wherein said sidewall sticks out with respect to further portions of said lateral surface of said PIC by at least 5 µm, preferably at least 10 µm, in view of a dicing profile (8) of said lateral surface. The dicing profile may be characterized by a lateral portion (100a) of the PIC substrate being removed and the remaining portions (100b) being kept. Such a device advantageously provides for a double protrusion, as discussed elsewhere in this document. Optical coupling between the fiber (31) comprised in the FA (30) requires good access to the edge coupler (3) on the PIC. The double protrusion may solve this problem, and is simpler than prior art solutions, such as lidless FAs.

The embodiments of this example may be combined with any feature of the embodiments of the other examples. For instance, the example device of Fig. 8 may or may not comprise any of a dam (6a, 6b) and/or submount and/or trench (7) and/or a first (1a) and second (1b) photonic circuit provided with a respective first (52a) and second (52b) temperature sensor and a shared temperature control element (58).

### Example 5

Fig. 9A (top view) and 9B (side cross-sectional view) illustrate example embodiments of the optoelectronic device according to Example 5.

The optoelectronic device examples of Fig. 9A-9B shown in this example are similar to those of Examples 1-4. They comprise a printed circuit board, PCB (2), comprising a planar PCB surface. It furthermore comprises a photonic integrated circuit, PIC (1), comprising a fiber attach region for attachment to a fiber array, FA (30), and an electronic interface (4) for connecting to the PCB (2). In embodiments of Fig. 7, the PIC (1) is mounted on a portion of said PCB surface being an integral part of the PCB surface. In other embodiments (not shown), the PIC (1) is mounted on a submount (22).

In this example, the device comprises a temperature control element (58), particularly a Peltier element, wherein said PIC (1) comprises a photonic circuit element zone (1000) comprising a first (1a) and second (1b) photonic circuit provided with a respective first (52a) and second (52b) temperature sensor, and wherein the respective thermal vias (5) extending from said PIC (1) through the PCB (2) are configured for temperature exchange with said temperature control element (58) being a shared temperature control element (58) shared by said first (1a) and said second (1b) photonic circuit. The device comprises a fiber attach region (3000) for providing an optical interface (300). Moreover, the device includes a photodetector zone (4000b) comprising photodetector elements and an electrical end zone comprising electrically interfacing elements for providing an electrical interface (600). The device further comprises a photodetector or read out integration circuit (400a), a biasing circuit for photodetector elements (400b) and a temperature sensor readout circuit (400c). The latter may relate or be identical to the respective temperature readout modules (54a, 54b) of the respective photonic circuits (1a, 1b) connected to the respective temperature sensors (52a, 52b) and to a shared temperature averaging module (55). The latter is connected to a shared controller (56) and driver (57) which controls the shared temperature control element (58) in view of the readouts of the temperatures of the respective photonic circuits (1a, 1b).

In other example embodiments (not shown), the device may further comprise a third and fourth photonic circuit with respective temperature sensors all sharing said temperature control element. In embodiments, the device may comprise more than four photonic circuits with respective temperature sensors all sharing said temperature control element.

The embodiments of this example may be combined with any feature of the embodiments of the other examples. For instance, the device of Fig. 4 and 5 may or may not comprise any of a dam (6a, 6b) and/or submount and/or trench (7) and/or a dicing profile (8).

Although the present invention has been described above with reference to certain embodiments thereof, it will be evident that various modifications and changes may be made to these embodiments without departing from the broader scope of the present invention, as defined by the appended claims. For instance, wherever embodiments are disclosed wherein said PIC is mounted on said PCB via a portion of said PCB surface being an integral part of the PCB surface, also the counterpart embodiments wherein said PIC is mounted on said PCB via a submount provided in a cutout of said PCB are deemed disclosed. Likewise, wherever embodiments are disclosed wherein said PIC is mounted on said PCB via a submount provided in a cutout of said PCB, also the counterpart embodiments wherein said PIC is mounted on said PCB via a portion of said PCB surface being an integral part of the PCB surface are deemed disclosed.

## Claims

1. An optoelectronic device, comprising:
a printed circuit board, PCB (2), comprising a planar PCB surface;
a photonic integrated circuit, PIC (1), comprising a fiber attach region for attachment to a fiber array, FA (30), and an electronic interface (4) for connecting to the PCB (2);
wherein said PIC (1) is mounted on a portion of said PCB surface being an integral part of the PCB surface;
wherein said PCB comprises an opening (53) surrounded, preferably circumferentially surrounded, by portions of said PCB and dividing said PCB surface in a first (2a) and second (2b) region for thermally insulating said first region (2a) and said second region (2b) from one another;
wherein the portion of said PCB surface on which the PIC (1) is mounted belongs to the first region (2a); and
wherein said connecting of the electronic interface (4) to the PCB (2) relates to at least one wire bond (40) extending to the second region (2b), said wire bond (40) preferably being comprised in the optoelectronic device.

2. The optoelectronic device of claim 1, wherein a substrate of the PCB (1) has a thermal conductivity lower than 50 W/(m·K), and/or wherein said substrate of the PCB (1) is FR-4 glass epoxy.

3. The optoelectronic device of claim 1 or 2, wherein the opening (53) extends along an opening length direction for a length being at least 25%, preferably at least 50%, of a maximum dimension of said PCB (2), wherein preferably the length of said opening (53) is between 50% and 150%, preferably between 60% and 100%, of a maximum dimension of said PIC (1) along said opening length direction.

4. The optoelectronic device of claims 1-3, wherein the PCB (1) comprises one or more thermal vias (5) for temperature exchange extending from said PIC through the PCB (1), said one or more vias preferably being metal vias, more preferably copper vias, wherein preferably said one or more vias extend orthogonally through the PCB (1).

5. The optoelectronic device of claims 1-4, wherein the opening (53) defines an opening width direction orthogonal to said opening length direction, and wherein a dimension of said first region (2a) along said opening width direction is not more than a dimension of said second region (2b) along said opening width direction, preferably at least 25% less than said dimension of said second region (2b).

6. The optoelectronic device of claims 1-5, further comprising, at a surface of the PIC (1) facing away from the PCB (2), a dam (6a, 6b) for preventing a fiber attach adhesive from flowing beyond said fiber attach region;
wherein preferably said dam comprises a longitudinal section (6a) extending along a length direction (9b) of said PIC (1) and a transversal section (6b) extending along a width direction (9a) of said PIC (1), together defining a dammed volume extending above said fiber attach region.

7. The optoelectronic device of claims 1-6, further comprising said FA (30) and a reinforcing member (63), preferably a glass block (63), for reinforcing a fiber attach adhesive connection (62); said reinforcing member (63) preferably at least partially extending within said dammed volume.

8. The optoelectronic device of claims 1-7, further comprising said wire bond (40) being surrounded circumferentially by an encapsulant (61).

9. The optoelectronic circuit according to claims 1-8, wherein said PIC (1) comprises a width along a width direction (9a) and a length along a length direction (9b), wherein said PIC (1) comprises, at the fiber attach region, an edge coupler (3) comprising a sidewall for coupling in light from said FA (30), said sidewall extending along said width direction (9a), wherein a ratio of the length and the width of said PIC (1) is at least 2:1, preferably at least 5:2, more preferably at least 3:1, most preferably 5:1.

10. The optoelectronic device of claims 1-9, further comprising, at a surface of the PIC (1) facing away from the PCB (2), a trench (7) for reducing stray light, said trench extending along a length direction of said PIC (1), wherein preferably a ratio of a length and a width of said PIC (1) is at least 2:1, preferably at least 5:2, more preferably at least 3:1, most preferably 5:1.

11. The optoelectronic device of claims 1-10, wherein said PIC (1) comprises, at the fiber attach region, an edge coupler (3) for coupling in light from said FA (30), and wherein said PIC (1) and said PCB (2) are relatively positioned such that the PIC (1) sticks out with respect to the PCB (1) by at least 100 µm, preferably at least 200 µm, more preferably between 300 µm and 1000 µm ; most preferably between 400 µm and 500 µm.

12. The optoelectronic device of claims 1-11, preferably the optoelectronic device of claim 11, wherein said edge coupler (3) comprises a sidewall extending along a lateral surface of said PIC (1), wherein said sidewall sticks out with respect to further portions of said lateral surface of said PIC by at least 5 µm, preferably at least 10 µm, in view of a dicing profile (8) of said lateral surface.

13. The optoelectronic device of claims 4-12, further comprising a temperature control element (58), preferably a Peltier element, wherein said PIC (1) comprises a first (1a) and second (1b) photonic circuit provided with a respective first (52a) and second (52b) temperature sensor, and wherein the respective thermal vias (5) extending from said PIC (1) through the PCB (2) are configured for temperature exchange with said temperature control element (58) being a shared temperature control element (58) shared by said first (1a) and said second (1b) photonic circuit.

14. A method for manufacturing an optoelectronic device, preferably the optoelectronic device of claims 1-11, more preferably the optoelectronic device of claims 6-11, comprising the steps of:
providing a PCB (2) comprising a planar PCB surface;
mounting a PIC (1) on said PCB (2), wherein preferably said mounting is via a portion of said PCB surface being an integral part of the PCB surface or via a submount (22) provided in a cutout of said PCB (2);
mounting a wire bond (40) connecting an electronic interface (4) comprised in the PIC (1) to the PCB (2);
positioning a fiber array, FA (30), with respect to a fiber attach region comprised in said PIC (1);
providing, at a surface of the PIC (1) facing away from the PCB (2), a dam (6a, 6b) for preventing a fiber attach adhesive from flowing beyond said fiber attach region;
providing said fiber attach adhesive for establishing a fiber attach adhesive connection (62) between said FA (30) and said fiber attach region;
preferably, providing, between said FA (30) and said dam (6a, 6b), a reinforcing member (63), preferably a glass block (63), for reinforcing said fiber attach adhesive connection (62);
providing, with respect to said wire bond (40), an encapsulant (61) for circumferentially surrounding said wire bond (40);
wherein said step of providing said dam (6a, 6b) precedes any of said step of providing said fiber attach adhesive and said step of providing said encapsulant (61).

15. A method for manufacturing an optoelectronic device, preferably the optoelectronic device of claims 1-11, more preferably the optoelectronic device of claims 8-11, comprising the steps of:
providing a PCB (2) comprising a planar PCB surface;
mounting a PIC (1) on said PCB (2), wherein preferably said mounting is via a portion of said PCB surface being an integral part of the PCB surface or via a submount (22) provided in a cutout of said PCB (2);
mounting a wire bond (40) connecting an electronic interface (4) comprised in the PIC (1) to the PCB (2);
positioning a fiber array, FA (30), with respect to a fiber attach region comprised in said PIC (1);
providing, with respect to said wire bond (40), an encapsulant (61) for circumferentially surrounding said wire bond (40) ;
providing a fiber attach adhesive for establishing a fiber attach adhesive connection (62) between said FA (30) and said fiber attach region;
preferably, providing, between said FA (30) and said wire bond (40), a reinforcing member (63), preferably a glass block (63), for reinforcing said fiber attach adhesive connection (62);
wherein said step of providing said encapsulant (61) precedes said step of providing said fiber attach adhesive.

16. An optoelectronic device, comprising:
a printed circuit board, PCB (2), comprising a planar PCB surface;
a photonic integrated circuit, PIC (1), comprising a fiber attach region for attachment to a fiber array, FA (30), and an electronic interface (4) for connecting to the PCB (2),
wherein said PIC (1) is mounted on said PCB;
wherein said optoelectronic device further comprises, at a surface of the PIC (1) facing away from the PCB (2), a dam (6a, 6b) for preventing a fiber attach adhesive from flowing beyond said fiber attach region;
wherein preferably said PIC (1) is mounted on said PCB either via a portion of said PCB surface being an integral part of the PCB surface or via a submount (22) provided in a cutout of said PCB (2).

17. An optoelectronic device, comprising:
a printed circuit board, PCB (2), comprising a planar PCB surface;
a photonic integrated circuit, PIC (1), comprising a fiber attach region for attachment to a fiber array, FA (30), and an electronic interface (4) for connecting to the PCB (2),
wherein said PIC (1) is mounted on said PCB;
wherein said PIC (1) comprises a width along a width direction (9a) and a length along a length direction (9b), wherein said PIC (1) comprises, at the fiber attach region, an edge coupler (3) comprising a sidewall for coupling in light from said FA (30), said sidewall extending along said width direction (9a), wherein a ratio of the length and the width of said PIC is at least 2:1, preferably at least 5:2, more preferably at least 3:1, most preferably 5:1.

18. An optoelectronic device, comprising:
a printed circuit board, PCB (2), comprising a planar PCB surface;
a photonic integrated circuit, PIC (1), comprising a fiber attach region for attachment to a fiber array, FA (30), and an electronic interface (4) for connecting to the PCB (2),
wherein said PIC (1) is mounted on said PCB;
wherein said PIC (1) further comprises, at a surface of the PIC (1) facing away from the PCB (2), a trench (7) for reducing stray light, said trench extending along a length direction of said PIC (1), wherein preferably a ratio of a length and a width of said PIC (1) is at least 2:1, preferably at least 5:2, more preferably at least 3:1, most preferably 5:1.

19. An optoelectronic device, comprising:
a printed circuit board, PCB (2), comprising a planar PCB surface;
a photonic integrated circuit, PIC (1), comprising a fiber attach region for attachment to a fiber array, FA (30), and an electronic interface (4) for connecting to the PCB (2),
wherein said PIC (1) is mounted on said PCB;
wherein
- said PIC (1) comprises, at the fiber attach region, an edge coupler (3) for coupling in light from said FA (30), and wherein said PIC (1) and said PCB (2) are relatively positioned such that the PIC (1) sticks out with respect to the PCB (1) by at least 100 µm, preferably at least 200 µm, more preferably between 300 µm and 1000 µm; most preferably between 400 µm and 500 µm; and/or
- said edge coupler (3) comprises a sidewall extending along a lateral surface of said PIC (1), wherein said sidewall sticks out with respect to further portions of said lateral surface of said PIC by at least 5 µm, preferably at least 10 µm, in view of a dicing profile (8) of said lateral surface.

20. An optoelectronic device, comprising:
a printed circuit board, PCB (2), comprising a planar PCB surface;
a photonic integrated circuit, PIC (1), comprising a fiber attach region for attachment to a fiber array, FA (30), and an electronic interface (4) for connecting to the PCB (2),
wherein said PIC (1) is mounted on said PCB;
said optoelectronic device further comprising a temperature control element (58), preferably a Peltier element, wherein said PIC (1) comprises a first (1a) and second (1b) photonic circuit provided with a respective first (52a) and second (52b) temperature sensor, and wherein the respective thermal vias (5) extending from said PIC (1) through the PCB (2) are configured for temperature exchange with said temperature control element (58) being shared by said first (1a) and said second (1b) photonic circuit.
